# EUROPÄISCHE PATENTSCHRIFT

(11) **EP 2 477 725 B1**
(45) Veröffentlichungstag und Bekanntmachung des Hinweises auf die Patenterteilung: **08.01.2014**
(21) Anmeldenummer: 10765569.8
(22) Anmeldetag: 13.09.2010
(51) Int. Cl.: B01D 53/26, C10L 3/10, F25J 1/00, F25J 1/02

(54) **VERFAHREN ZUM TROCKNEN VON ERDGAS DURCH GEMEINSAME KÜHLUNG VON LÖSUNGSMITTEL UND ERDGAS**
METHOD FOR DRYING NATURAL GAS BY THE JOINT COOLING OF SOLVENT AND NATURAL GAS
PROCÉDÉ DE SÉCHAGE DE GAZ NATUREL PAR REFROIDISSEMENT COMMUN DE SOLVANT ET DE GAZ NATUREL

(30) Priorität: 14.09.2009 DE 102009041104
(43) Veröffentlichungstag der Anmeldung: 25.07.2012
(73) Patentinhaber: ThyssenKrupp Uhde GmbH, 44141 Dortmund (DE)
(72) Erfinder: MENZEL, Johannes, 45731 Waltrop (DE)
(86) Internationale Anmeldenummer: PCT/EP2010/005597
(87) Internationale Veröffentlichungsnummer: WO 2011/029621

(56) Entgegenhaltungen:
- EP-A1- 1 022 046
- WO-A1-2004/085037
- DE-A1- 1 794 353
- DE-C1- 19 830 458
- DE-T2- 60 002 710
- The Dow Chemical Company: "Use of SELEXOL Solvent for Hydrocarbon Dewpoint Control and Dehydration odf Natural Gas", Laurence Reid Gas Conditioning Conference, 28. Februar 1994 (1994-02-28), XP002615934, Norman Oklahoma Gefunden im Internet: URL:http://msdssearch.dow.com/PublishedLit eratureDOWCOM/dh_0036/0901b80380036f65.pdf ?filepath=gastreating/pdfs/noreg/170-01403 .pdf&fromPage=GetDoc [gefunden am 2011-01-10]

## Beschreibung

Die Erfindung betrifft ein Verfahren zur Trocknung von Industriegasen und insbesondere von Erdgas. In einer Vielzahl von Fällen wird die Trocknung von Gasen so ausgeführt, dass ein wasserabsorbierendes Lösungsmittel bei in der Regel Umgebungstemperatur mit dem wasserhaltigen Gas in Kontakt gebracht wird, so dass das Lösungsmittel das in dem Gas enthaltene Wasser absorbiert. Das Wasser wird durch Ausdampfen aus dem Lösungsmittel entfernt und das Lösungsmittel dadurch regeneriert.

Die US 3105748 A beschreibt ein Verfahren zur Entfernung von Wasser aus Gasen und insbesondere aus Erdgas, wobei das Wasser in dem Gas durch ein absorbierendes Lösungsmittel entfernt wird, welches im Kreis geführt wird, und welches zur Regeneration in eine Regenerationskolonne oder eine vergleichbar geartete Vorrichtung geleitet wird, in der das Lösungsmittel erhitzt wird, so dass das darin enthaltene Wasser vollständig verdampft, und das regenerierte Lösungsmittel in Dünnschichtverdampfern in dünnen Filmen mit trockenem Gas in Kontakt gebracht wird, so dass das Lösungsmittel weiter getrocknet wird.

Die DE 60002710 T2 beschreibt ein Verfahren und eine Vorrichtung zum Entfernen von Erdgas, welches das Erdgas mit einer Flüssigkeit, die ein Absorptionsmittel für Wasser enthält, in Kontakt bringt, und das Erdgas und die Flüssigkeit turbulenten Mischbedingungen aussetzt, wodurch bewirkt wird, dass das Wasser von dem Absorptionsmittel absorbiert wird, und eine Erdgasphase mit reduziertem Wassergehalt und eine Flüssigphase, die das Absorptionsmittel und das absorbierte Wasser enthält, getrennt werden, und das Mischen in einem Turbulenzreaktor durchgeführt wird, der einen Behälter mit einem Gaseinlass, einem Flüssigkeitseinlass, einem Auslass, der zu einem Venturi-Durchgang führt, und ein Rohr umfasst, das sich von dem Auslass zurück stromauf erstreckt, wobei das Rohr perforiert und/oder unter Abstand von der Peripherie das Auslasses angeordnet ist. In einer Ausführungsform der Erfindung kann vor oder nach dem Turbulenzmischschritt ein zusätzlicher Mischschritt durchgeführt werden, welcher selbst ein Turbulenzmischschritt sein kann. In einer weiteren Ausführungsform der Erfindung werden das Erdgas und die Flüssigkeit in dem Kontaktreaktor in eine homogene Mischung gebracht, wobei die homogene Mischung vor der Trennung in eine Gasphase und eine Flüssigphase gekühlt wird. Die Lehre beschreibt keine Ausführungsform, in der die Gasaustrittstemperatur eines in Strömungsrichtung nachgeschalteten Kühlers niedriger ist als die des in Strömungsrichtung davorliegenden Kühlers.

Die WO 2004/085037 A1 beschreibt ein System zur Trocknung von Gas, wozu beispielhaft die Trocknung von Erdgas in Verbindung mit der Extraktion von Öl und Gas gehört, welches eine Trocknungseinheit zum Trocknen von Gas mit einer Flüssigkeit enthält, welche mit einer oder mehreren Pumpen zur Mischung mit dem Gas und in eine Regenerationseinheit, welche die absorbierende Flüssigkeit regeneriert, rezirkuliert wird, wobei die Trocknungseinheit ein oder mehrere Verfahrensstufen enthält, und jede einzeine Stufe eine Massentransfereinheit in Form eines statischen Mischers oder einer Rohrschleife enthält, in welcher das Gas mit der Flüssigkeit gemischt wird, und in Fließrichtung der Trocknungsflüssigkeit zu einer Gas-/Flüssigkekstrennvorrichtung geführt wird, und wobei das Gas zur nächsten Stufe oder zu einem Auslass geführt wird, während die Trocknungsflüssigkeit zur Regenerationsstufe und/oder zu der Massentransfereinheit für die relevanten Prozessstufen geführt wird. In einer Ausführungsform wird in der genannten Lehre ein Kühler in dem Rezirkulationskreislauf untergebracht, so dass durch die gekühlte Trocknungsflüssigkeit eine indirekte Kühlung des Gases stattfinden kann. Auch diese Lehre beschreibt keine Ausführungsform, in der die Gasaustrittstemperatur eines in Strömungsrichtung nachgeschalteten Kühlers niedriger ist als die des in Strömungsrichtung davorliegenden Kühlers.

Die DE 19830458 C1 beschreibt ein Verfahren zum Trocknen von bei der Erdölförderung anfallenden Erdgasen, wobei erfindungsgemäß Erdgase, die als Begleitstoffe Wasser und leichtsiedende, kondensationsfähige Kohlenwasserstoffe enthalten, mittels eines internen Kreislaufs eines Trocknungsmediums, wobei in einem Kaltabscheider ein Kondensat aus dem Trocknungsmedium mit allen bei der Betriebstemperatur und dem Betriebsdruck des Kaltabscheiders verflüssigten Begleitstoffen des Erdgases abgeschieden wird und wobei das Kondensat anschließend einem Drei-Phasen-Abscheider zugeführt wird, wobei erfindungsgemäß das aus dem Kaltabscheider mit dessen Austrittstemperatur austretende Kondensat ohne Zwischenbeheizung dem Drei-Phasen-Abscheider zugeführt wird, aus dem das Trocknungsmedium mit dem Wasser, gasförmige Kohlenwasserstoffe, und kondensierte Kohlenwasserstoffe getrennt und zumindest im Wesentlichen quantitativ abgezogen werden, und dass das Trocknungsmedium zunächst einem Entwässerungs-Regenerator zum destillativen Austreiben des Wassers und anschließend in erwärmten Zustand dem Drei-Phasen-Abscheider zu dessen Beheizung zugeführt wird. In einem Ausführungsbeispiel wird die sukzessive Abkühlung des Gas-Flüssigkeitsgemisches beschrieben, so dass die Gasaustrittstemperatur eines in Strömungsrichtung nachgeschalteten Kühlers niedriger ist als die des in Strömungsrichtung davorliegenden Kühlers. Die Lehre beschreibt keine Ausführungsform, in der in Serie geschaltete Kühler zur Anwendung kommen, die gleichartig sind, wobei jedem Kühler ein Lösungsmittelstrom zugeführt wird, und jedem Kühler ein nachgeschalteter Gas-/Flüssigkeitsabscheider zugeordnet ist.

Die DE 1794353 A beschreibt ein Verfahren zum Entfernen von Wasser aus unter Druck stehenden Erdgasen, die in einer Tieftemperaturanlage, insbesondere zur Spitzenlastdeckung teilweise verflüssigt werden und bei denen die sauren Komponenten, insbesondere Kohlendioxid, durch Waschen bei stark erniedrigter Temperatur mit tiefsiedenden, organischen, wasserlöslichen Lösungsmitteln entfernt werden, wobei eine kleine Teilmenge des Lösungsmittels in den unter Druck stehenden Erdgasstrom vor dessen Abkühlung unter dem Gefrierpunkt des im Erdgas enthaltenden Wasserdampfes eingespritzt und nach weiterer Abkühlung des Erdgasstromes zusammen mit dem auskondensierten Wasser wieder abgezogen wird. Die Lehre beschreibt keine Kühler, die zum Trocknen des Gases in Serie geschaltet sind.

In Verfahren nach dem Stand Technik wird der Kontakt zwischen Gas und Lösungsmittel in der Regel in einer Absorptionskolonne über zugehörige Stoffaustauscheinbauten, wie Böden, Füllkörper und Packungen hergestellt. Da in einer konventionellen Trocknungsanlage die Absorptionskolonne die eindeutig kostenaufwendigste Ausrüstung ist, wäre es günstig, die Kostenaufwendungen für die Trocknung in diesem Anlagenteil zu reduzieren. Es besteht deshalb die Aufgabe, ein Verfahren und eine Vorrichtung zur Verfügung zu stellen, welches nach Möglichkeit die Wasserabsorption in einer kostengünstigeren Vorrichtung ausführt.

Die Erfindung löst die Aufgabe dadurch, dass die Trocknung durch eine gemeinsame Kühlung von Gas und Lösungsmittel erfolgt. Die Trocknung des Gases erfolgt durch Absorption des im Gas enthaltenen Wassers durch ein für die Gastrocknung geeignetes Lösungsmittel im Temperaturbereich von 50°C bis -20°C, wobei erfindungsgemäß die Kühlung des Lösungsmittels und des zu reinigenden Gases gemeinsam in mehreren hintereinander geschalteten Kühlern erfolgt. Die Trennung des die jeweiligen Kühler verlassenden Gas-/Lösungsmittelgemisches wird in einem nachgeschalteten Gas-/Flüssigkeitsabscheider durchgeführt. Durch die mit Lösungsmittel beaufschlagten und hintereinander geschalteten Kühler ist es möglich, dass eine üblicherweise zur Trocknung verwendete Kolonne vollständig entfallen kann, was eine maximale Einsparung bei der Absorption von Wasser aus dem Einsatzgas ergibt. Da in einer konventionellen Trocknungsanlage die Absorptionskolonne die eindeutig kostenaufwendigste Ausrüstung ist, ergibt sich auch für die gesamte Trocknungsanlage eine signifikante Kosteneinsparung.

Durch die Ausführung des Trocknungsprozesses in mindestens zwei hintereinander geschalten Wärmeaustauschvorrichtungen oder Kühlern kann das jeweilige Einsatzgas auf einen sehr niedrigen Wasseraustrittsgehalt getrocknet werden.

Durch ein niedriges Temperaturniveau beider Medien wird die Aufnahme des Wassers in das absorbierende Lösungsmittel verbessert, während andererseits der Taupunkt des Gases durch das Herunterkühlen soweit absinkt, dass eine sehr intensive Absorption des Wassers durch das Lösungsmittel möglich ist. Die Erfindung betrifft auch eine Vorrichtung, mit der dieses Verfahren ausgeführt werden kann. Besonders vorteilhaft ist die Erfindung, wenn das Gas unabhängig von den Erfordernissen der Trocknung ohnehin auf tiefere Temperaturen heruntergekühlt wird oder werden muss.

Die Erfindung lässt sich aber auch vorteilhaft anwenden, wenn das Gas nur auf Umgebungstemperatur herabgekühlt wird, wie dies bei einer konventionellen Gastrocknung auch erfolgt. Zu diesem Zweck kann die Kühlung, die sonst in einer Vorrichtung erfolgen würde, in zwei, drei oder mehreren hintereinandergeschalteten Vorrichtungen erfolgen, wobei die zur Kühlung benötigte Gesamtfläche nur unwesentlich größer wäre als bei einer Einzelvorrichtung.

Das Lösungsmittel wird hinter den jeweiligen Kühlern aus den Gas/Flüssigkeitsabscheidern in eine Regenerationseinrichtung geführt, in der das Wasser durch Erhitzen und Verdampfen entfernt wird. Das regenerierte Lösungsmittel wird rezirkuliert und vor den Kühlern in das Gas-/Lösungsmittelgemisch eingespeist. Das Verfahren kann dadurch abgewandelt werden, dass ein mit Wasser vorbetadenes Lösungsmittel aus mindestens einem Gas-/Flüssigkeitsabscheider vor einem Kühler in das Gas eingespeist wird, der sich in Strömungsrichtung vor demjenigen Kühler befindet, aus dem das mit Wasser beladene Lösungsmittel abgezogen wurde. Aus dem in Strömungsrichtung des Gases letzten Gas-/Flüssigkeitsabscheider kann das gereinigte und getrocknete Gas entnommen werden. Durch eine Veränderung der Kühlerzahl oder der Lösungsmittelrückführung kann der Trocknungsgrad weiter erhöht werden.

Im Einzelnen löst die Erfindung die Aufgabe durch ein Verfahren zur Entfernung von Wasser aus Erdgasen und Industriegasen, wobei
- für die Gastrocknung ein von Wasser befreites Lösungsmittel aus einer Lösungsmittelregenerationseinrichtung zur Verfügung gestellt wird, und
- das Einsatzgas durch zwei oder mehr als zwei in Serie hintereinandergeschaltete Kühler geführt wird, wobei jedem dieser Kühler ein Lösungsmittelstrom zugeführt wird, der dem in den jeweiligen Kühler eintretenden Gas Wasser entzieht, und
- in jeden dieser Kühler ein gemischter, aus Gas und Lösungsmittel bestehender Strom eintritt, der dann durch den jeweiligen Kühler geleitet wird, und nach gemeinsamer Kühlung im jeweiligen Kühler mittels eines dem jeweiligen Küchler im Austritt zugehörigen Gas/Flüssigkeitsabscheiders in einen im Wassergehalt reduzierten Gasstrom und einen mit Wasser beladenen Lösungsmittelstrom aufgetrennt wird, und
- der Wassergehalt das Gases sukzessiv vom in Strömungsrichtung ersten Kühler bis zum in Strömungsrichtung letzten Kühler abnimmt, wobei der jeweils abgeschiedene, mit Wasser beladene Lösungsmittelstrom entweder als Einsatzstrom für einen vorgeschalteten Kühler verwendet wird, oder direkt in die Lösungsmittelregenerationseinrichtung zurückgeführt wird, in der das mit Wasser angereicherte Lösungsmittel wieder weitgehend von Wasser befreit wird,
und welches dadurch gekennzeichnet ist, dass
- das Lösungsmittel hinter den jeweiligen Kühlern aus den Gas-Flüssigkeitsabscheidem in eine Regenerationseinrichtung geführt wird, in der das Wasser durch Erhitzen und Verdampfen entfernt wird, rezirkuliert und vor den Kühlern in das Gas-Lösungsmittelgemisch eingespeist wird, so dass die Gasaustrittstemperatur eines in Strömungsrichtung nachgeschalteten Kühlers niedriger ist als die des in Strömungsrichtung davorliegenden Kühlers, und
- dem Gasstrom des in Strömungsrichtung letzten der in Serie hintereinander geschalteten Kühlers vor Durchströmen desselben ein aus der Lösungsmittelregenerationseinrichtung kommender, regenerierter Lösungsmittelstrom zugeführt wird, und alle anderen der in Strömungsrichtung davor geschalteten Kühler den jeweiligen Lösungsmittelstrom zugeführt bekommen, der von dem Gas-Flüssigkeitsabscheider des jeweils nachgeschalteten Kühlers abgeschieden wird und das aus dem in Strömungsrichtung ersten GasFlüssigkeitsabscheider erhaltene wasserhaltige Lösungsmittel zur Wasserentfernung in die Lösungsmittelregenerationseinrichtung zurückgeführt wird.

Dadurch kann die Trocknung von Kühler zu Kühler intensiviert werden, weil die Temperatur in jeder nachfolgenden Kühlungsstufe niedriger ist. Durch diese Ausführung des Verfahrens ist eine sehr intensive Absorption des Wassers durch das Lösungsmittel möglich, wodurch die Wasserabsorption in einer kostengünstigeren Vorrichtung ausführbar ist.

Das erfindungsgemäße Verfahren kann beispielsweise weiter dadurch abgewandelt werden, dass den jeweiligen Gasströmen des in Strömungsrichtung ersten und letzten der in Serie hintereinander geschalteten Kühler vor Durchströmen derselben jeweils ein aus der Lösungsmittelregenerationseinrichtung kommender, regenerierter Lösungsmittelteilstrom zugeführt wird, und das alle anderen dazwischen geschalteten Kühler den jeweiligen Lösungsmittelstrom zugeführt bekommen, der von dem Gas/Flüssigkeitsabscheider des jeweils nach geschalteten Kühlers abgeschieden wird und dass der in Strömungsrichtung ersten und zweiten Gas-/Flüssigkeitsabscheider abgeschiedene mit Wasser beladene Lösungsmittelstrom zur Wasserentfemung in die Lösungsmittelregenerationseinrichtung zurückgeführt wird.

In einer Ausgestaltung des Verfahrens ist die für die jeweils benötigte Gas/Flüssigabscheidung benötigte Abscheideeinrichtung konstruktiv in dem jeweiligen Kühler mit integriert. Die benötigte Abscheideeinrichtung kann beliebig geartet sein. In einer bevorzugten Ausführungsform ist die benötigte Abscheideeinrichtung ein Lamellenabscheider.

Prinzipiell kann die Verteilung und Rückführung der einzelnen Lösungsmittelströme aus den Gas-/Flüssigkeitsabscheidem in die Lösungsmittelregenerationseinrichtung beliebig ausgeführt werden. Prinzipiell kann auch die Zuführung von frischem Lösungsmittel aus der Lösungsmittelregenerationseinrichtung oder dem letzten Gas-/Flüssigkeitsabscheider beliebig ausgeführt werden. Die Lösungsmitielregenerationseinrichtung ist beispielhaft eine Regenerationskolonne.

In einer vorteilhaften Ausführungsform wird der Lösungsmittelstrom aus dem letzten Gas-/Flüssigkeitsabscheider geteilt, wobei die einzelnen Teilströme in mindestens zwei gashaltige Lösungsmittelströme vor je einem Kühler geführt werden. In einer weiteren Ausführungsform kann auch der regenerierte Lösungsmittelstrom aus der Lösungsmittelregenerationseinrichtung geteilt werden, und in mindestens einen gashaltigen Lösungsmittelstrom vor einem Kühler geführt werden.

Als Lösungsmittel können die physikalischen Lösungsmittel Ethylenglykol, Diethylenglykol, Triethylenglykol oder Tetraethylenglykol oder ein Gemisch dieser Substanzen verwendet werden. Als physikalisches Lösungsmittel können weiterhin die physikalischen Lösungsmittel N-Methylmorpholin oder N-Acetylmorpholin oder ein Gemisch dieser Substanzen verwendet werden. Als physikalisches Lösungsmittel können auch die Lösungsmittel Methanol oder alkylierte Polyethylenglykole oder ein Gemisch dieser Substanzen verwendet werden.

Das erfindungsgemäße Verfahren besitzt den Vorteil, dass die Absorption von Wasser aus einem zu trocknenden Erdgas ohne kostenaufwändige Absorptionskolonne auskommt. Durch eine geeignete Verschaltung der einzelnen Anlagenteile kann der Taupunkt von Wasser in dem zu reinigenden Gas deutlich herabgesetzt werden. Die Erfindung beansprucht auch eine Vorrichtung, mit der dieses Verfahren ausgeführt werden kann.

Die erfindungsgemäße Ausgestaltung eines Verfahrens zur Trocknung von Industriegasen wird anhand einer Zeichnung genauer erläutert, wobei das erfindungsgemäße Verfahren nicht auf diese Ausführungsform beschränkt ist.

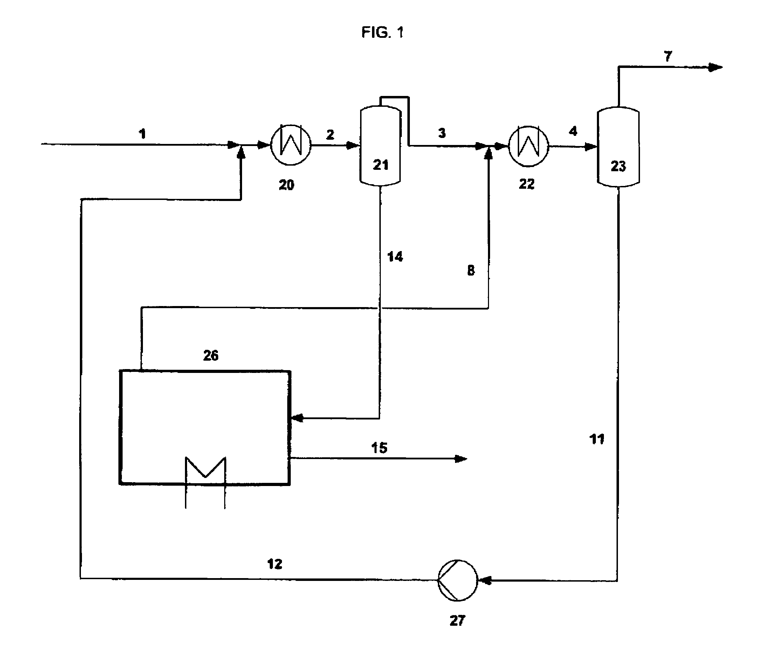

FIG. 1: Ein zu trocknender Gasstrom (1) wird mit einem wasserhaltigen Lösungsmittelstrom (12), der aus der Gas/Flüssigkeitsabscheidung (23) abgezogen wird, gemischt und über einen ersten Kühler (20) geführt, wobei ein lösungsmittelhaltiger Gasstrom (2) erhalten wird. Dieser wird in einen ersten Gas-/Flüssigkeitsabscheider (21) geführt, wobei ein wasserhaltiger Lösungsmittelstrom (14) und ein vorgetrocknetes Gas (**3**) erhalten werden. Der vorgetrocknete Gasstrom (**3**) wird mit einem von Wasser befreiten Lösungsmittelstrom (**8**) gemischt und in einen zweiten Kühler (**22**) geführt, wobei ein lösungsmittelhaltiger Gasstrom (**4**) erhalten wird. Das Lösungsmittel nimmt den größten Teil der restlichen Menge des Wassers aus dem Gas auf. Die Trennung des getrockneten Gases (**7**) von dem wasserhaltigen Lösungsmittelstrom (**11**) erfolgt in dem zweiten Gas-/Flüssigkeitsabscheider (**23**). Der wasserhaltige Lösungsmittelstrom (**11**) aus dem zweiten Gas-/Flüssigkeitsabscheider (**23**) wird mittels einer Pumpe (**27**) wieder vor den ersten Kühler (**20**) geführt. Der wasserhaltige Lösungsmittelstrom (**14**) aus dem ersten Gas-/Flüssigkeitsabscheider (**21**) wird zurück in die Lösungsmittelregenerationseinrichtung (**26**) geführt. In der Lösungsmittelregenerationseinhchtung (**26**) wird das vom Lösungsmittel aufgenommene Wasser vom Lösungsmittel abgetrennt und verlässt als Abdampf- oder Abwasserstrom (**15**) die Anlage. Der weitgehend von Wasser befreite Lösungsmittelstrom (**8**) steht danach wieder für die Gastrocknung zur Verfügung.

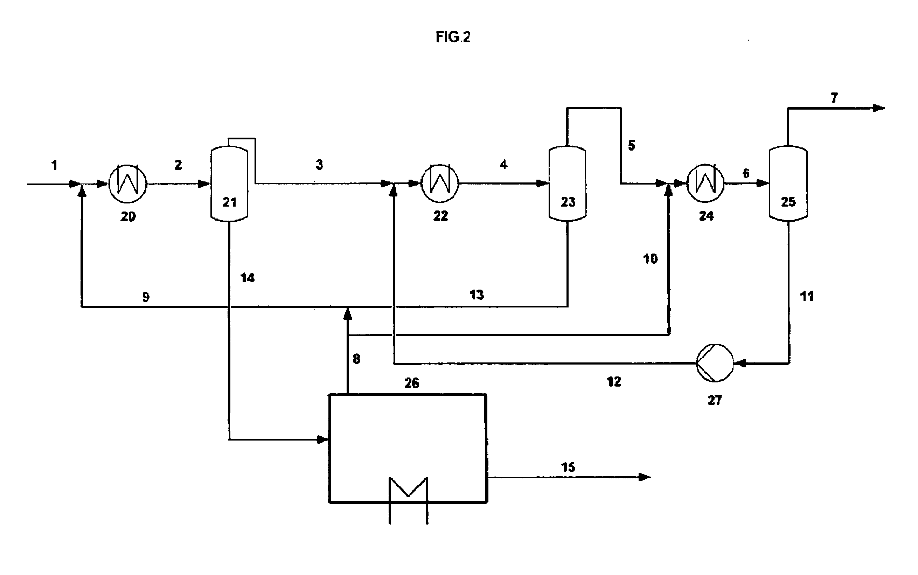

FIG. 2: Ein zu trocknender Gasstrom (**1**) wird mit weitgehend wasserfreiem Lösungsmittel (**9**) gemischt. Das Gas-/Flüssigkeitsgemisch durchströmt einen ersten Kühler (**20**), wobei ein lösungsmittelhaltiger Gasstrom (**2**) erhalten wird. Im ersten Gas-/Flüssigkeitsabscheider (**21**) wird der wasserhaltige Lösungsmittelstrom (**14**) von dem vorgetrockneten Gasstrom (**3**) getrennt. Dem vorgetrockneten Gasstrom (**3**) wird ein wasserhaltiger Lösungsmittelstrom (**12**) zugemischt. Das dabei erzeugte Gas/Flüssigkeitsgemisch wird gemeinsam in einem zweiten Kühler (**22**) gekühlt, wobei ein lösungsmittelhaltiger Gasstrom (**4**) erhalten wird. Die Trennung des vorgetrockneten Gases (**5**) von dem wasserhaltigen Lösungsmittelstrom (**13**) erfolgt in dem Gas/Flüssigkeitsabscheider (**23**). Dem vorgetrockneten, den zweiten Gas/Flüssigkeitsabscheider (**23**) verlassenden Gasstrom (**5**) wird ein zweiter regenerierter Lösungsmittelstrom (**10**) zugeführt. Das Gas-/Flüssigkeitsgemisch durchströmt dann gemeinsam den dritten Kühler (**24**), wobei ebenfalls ein lösungsmittelhaltiger Gasstrom (**6**) erhalten wird. Das Lösungsmittel nimmt den größten Teil der restlichen Menge des Wassers aus dem Gas auf. Die Trennung des getrockneten Gases (**7**) von dem wasserhaltigen Lösungsmittel (**11**) erfolgt in dem Gas-/Flüssigkeitsabscheider (**25**). Von der Pumpe (**27**) wird der wasserhaltige Lösungsmittelstrom (**12**) für die weitere Trocknung des vorgetrockneten Gases (**3**) wieder vor den zweiten Kühler (**22**) geführt.

Der wasserhaltige Lösungsmittelstrom (**14**) aus dem ersten Gas/Flüssigkeitsabscheider (**21**) wird zurück in die Lösungsmittelregenerationseinrichtung (**26**) geführt. In der Lösungsmittelregenerationseinrichtung (**26**) wird das vom Lösungsmittel aufgenommene Wasser vom Lösungsmittel abgetrennt und verlässt als Abdampf- oder Abwasserstrom (**15**) die Anlage. Der weitgehend von Wasser befreite Lösungsmittelstrom (**8**) steht dann für die Gastrocknung wieder zur Verfügung.

Der vom zweiten Gas-/Flüssigkeitsabscheider (**23**) kommende wasserhaltige Lösungsmittelstrom (**13**) wird nicht zurück in die Lösungsmittelregenerationseinrichtung zurückgeführt, sondem zusammen mit dem ersten Teilstrom des regenerierten Lösungsmittels (**9**) vor den ersten Kühler (**20**) geführt.

### Bezugszeichenliste

- 1: Zu trocknender Gasstrom
- 2: Lösungsmittelhaltiger Gasstrom
- 3: Vorgetrocknetes Gas
- 4: Lösungsmittelhaltiger Gasstrom
- 5: Vorgetrocknetes Gas
- 6: Lösungsmittelhaltiger Gasstrom
- 7: Getrocknetes Gas
- 8: Weitgehend von Wasser befreiter Lösungsmittelstrom
- 9: Erster Teilstrom Regeneriertes Lösungsmittel mit weitgehend wasserfreiem Lösungsmittel
- 10: Zweiter Teilstrom Regeneriertes Lösungsmittel
- 11: Wasserhaltiger Lösungsmittelstrom
- 12: Wasserhaltiger Lösungsmittelstrom von Pumpe
- 13: Wasserhaltiger Lösungsmittelstrom
- 14: Wasserhaltiger Lösungsmittelstrom
- 15: Abdampf/Abwasser
- 20: Erster Kühler
- 21: Erster Gas-/Flüssigkeitsabscheider
- 22: Zweiter Kühler
- 23: Zweiter Gas-/Flüssigkeitsabscheider
- 24: Dritter Kühler
- 25: Dritter Gas-/Flüssigkeitsabscheider
- 26: Lösungsmittelregenerationseinrichtung
- 27: Pumpe

## Patentansprüche

1. Verfahren zum Trocknen von Erdgas (1) durch gemeinsame Kühlung von Lösungsmittel (9,12) und Erdgasen (1), wobei
• für die Gastrocknung ein von Wasser befreites Lösungsmittel (8) aus einer Lösungsmittelregenerationseinrichtung (26) zur Verfügung gestellt wird, und
• das Einsatzgas (1) durch zwei oder mehr als zwei in Serie hintereinandergeschaltete Kühler (20,22,24) geführt wird, wobei jedem dieser Kühler (20,22,24) ein Lösungsmittelstrom (8,10,12) zugeführt wird, der dem in den jeweiligen Kühler (20,22,24) eintretenden Gas (1,3,5) Wasser entzieht, und
• in jeden dieser Kühler (20,22,24) ein gemischter, aus Gas und Lösungsmittel bestehender Strom (2,4,6) eintritt, der dann durch den jeweiligen Kühler (20,22,24) geleitet wird, und nach gemeinsamer Kühlung im jeweiligen Kühler (20,22,24) mittels eines dem jeweiligen Kühler (20,22,24) im Austritt zugehörigen Gas/Flüssigkeitsabscheiders (21,23,25) in einen im Wassergehalt reduzierten Gasstrom (3,5,7) und einen mit Wasser beladenen Lösungsmittelstrom (11,13,14) aufgetrennt wird, und
• der Wassergehalt des Gases (1,3,5) sukzessiv vom im Strömungsrichtung ersten Kühler (20) bis zum in Strömungsrichtung letzten Kühler (22,24) abnimmt, wobei der jeweils abgeschiedene, mit Wasser beladene Lösungsmittelstrom (11,13,14) entweder als Einsatzstrom (12,13) für einen vorgeschalteten Kühler (20,22) verwendet wird, oder direkt in die Lösungsmittelregenerationseinrichtung (26) zurückgeführt wird (14), in der das mit Wasser angereicherte Lösungsmittel (14) wieder von Wasser (15) befreit wird,
**dadurch gekennzeichnet, dass**
• das Lösungsmittel (14) hinter den jeweiligen Kühlern (20,22) aus den Gas-Flüssigkeitsabscheidern (21,23) in eine Regenerationseinrichtung (26) geführt wird, in der das Wasser (15) durch Erhitzen und Verdampfen entfernt wird, rezirkuliert und vor den Kühlern (20,22,24) in das Gas-Lösungsmittelgemisch (1,3,5) eingespeist (8,9,10) wird, so dass die Gasaustrittstemperatur eines in Strömungsrichtung nachgeschalteten Kühlers (22,24) niedriger ist als die des in Strömungsrichtung davorliegenden Kühlers (20,22), und
• dem Gasstrom (3,5) des in Strömungsrichtung letzten der in Serie hintereinander geschalteten Kühler (20,22,24) vor Durchströmen desselben ein aus der Lösungsmittelregenerationseinrichtung (26) kommender, regenerierter Lösungsmittelstrom (8,10) zugeführt wird, und alle anderen der in Strömungsrichtung davor geschalteten Kühler (20,22) den jeweiligen Lösungsmittelstrom (9,12) zugeführt bekommen, der von dem Gas/Flüssigkeitsabscheider (23,25) des jeweils nachgeschalteten Kühlers (22,24) abgeschieden wird, und das aus dem in Strömungsrichtung ersten Gas-/Flüssigkeitsabscheider (21) erhaltene wasserhaltige Lösungsmittel (14) zur Wasserentfernung in die Lösungsmittelregenerationseinrichtung (26) zurückgeführt wird.

2. Verfahren zum Trocknen von Erdgas (1) durch gemeinsame Kühlung von Lösungsmittel (9,12) und Erdgasen (1) nach Anspruch 1, **dadurch gekennzeichnet, dass** den jeweiligen Gasströmen des in Strömungsrichtung ersten (20) und letzten (22,24) der in Serie hintereinander geschalteten Kühler (20,22,24) vor Durchströmen derselben jeweils ein aus der Lösungsmittelregenerationseinrichtung (26) kommender, regenerierter Lösungsmittelteilstrom (8,9,10) zugeführt wird, und dass alle anderen dazwischengeschalteten Kühler (22) den jeweiligen Lösungsmittelstrom (12) zugeführt bekommen, der von dem Gas-/Flüssigkeitsabscheider (23,25) des jeweils nachgeschalteten Kühlers (22,24) abgeschieden wird und dass der im in Strömungsrichtung ersten und zweiten Gas-/Flüssigkeitsabscheider (21,23) abgeschiedene wasserhaltige Lösungsmittelstrom (14,13) zur Wasserentfernung in die Lösungsmittelregenerationseinrichtung (26) zurückgeführt wird.

3. Verfahren zum Trocknen von Erdgas (1) durch gemeinsame Kühlung von Lösungsmittel (9,12) und Erdgasen (1) nach einem der Ansprüche 1 oder 2, **dadurch gekennzeichnet**, das die für die jeweils benötigte Gas/Flüssigabscheidung benötigte Abscheideeinrichtung konstruktiv in dem jeweiligen Kühler (20,22,24) mit integriert ist.

4. Verfahren zum Trocknen von Erdgas (1) durch gemeinsame Kühlung von Lösungsmittel (9,12) und Erdgasen (1) nach einem der Ansprüche 1 bis 3, **dadurch gekennzeichnet, dass** die für die benötigte Gas-/Flüssigabscheidung benötigte Abscheideeinrichtung (21,23,25) eine Abscheideeinrichtung des Typs Lamellenabscheider ist.

5. Verfahren zum Trocknen von Erdgas (1) durch gemeinsame Kühlung von Lösungsmittel (9,12) und Erdgasen (1) nach einem der Ansprüche 1 bis 4, **dadurch gekennzeichnet, dass** als physikalisches Lösungsmittel Ethylenglykol, Diethylenglykol, Triethylenglykol oder Tetraethylenglykol oder ein Gemisch dieser Substanzen verwendet wird.

6. Verfahren zum Trocknen von Erdgas (1) durch gemeinsame Kühlung von Lösungsmittel (9,12) und Erdgasen (1) nach einem der Ansprüche 1 bis 4, **dadurch gekennzeichnet dass** als physikalisches Lösungsmittel N-Methylmorpholin oder N-Acetylmorpholin oder ein Gemisch dieser Substanzen verwendet wird.

7. Verfahren zum Trocknen von Erdgas (1) durch gemeinsame Kühlung von Lösungsmittel (9,12) und Erdgasen (1) nach einem der Ansprüche 1 bis 4, **dadurch gekennzeichnet, dass** als physikalisches Losungsmittel Methanol oder alkylierte Polyethylenglykole oder ein Gemisch dieser Substanzen verwendet wird.

## Claims

1. Process for the drying of natural gas (1) by joint cooling of solvent (9,12) and natural gases (1), in which
• a solvent (8) freed from water in a solvent regeneration unit (26) is supplied for gas drying and
• the feed gas (1) is routed through two or more than two coolers connected in series (20,22,24), each of these coolers (20,22,24) being supplied with a solvent stream (8, 9,10,12) which removes water from the gas (1,3,5) entering the respective cooler (20,22,24), and
• a mixed stream consisting of gas and solvent (2,4,6) enters each of these coolers (20,22,24), which is then routed through the respective cooler (20,22,24) and, after joint cooling in the respective cooler (20,22,24), separated by means of the associated gas/liquid separator (21,23,25) in the outlet of the respective cooler (20,22,24) into a gas stream of reduced water content (3,5,7) and a solvent stream laden with water (11,13,14), and
• the water content of the gas (1,3,5) is successively reduced from the first cooler (20) in flow direction to the last cooler (22,24) in flow direction, each solvent stream separated and laden with water (11,13,14) being either used as feed stream (12,13) for an upstream cooler (20,22) or directly returned to the solvent regeneration unit (26) where the water-enriched solvent (14) is again freed from water (15),
which is **characterised in that**
• the solvent (14) downstream of the respective cooler (20,22) is routed from the gas/liquid separators (21,23) into a regeneration unit (26) where the water (15) is removed by heating and evaporation, recirculated and, upstream of the coolers (20,22,24), fed (8,9,10) into the mixture of gas and solvent (1,3,5) so that the gas outlet temperature of a cooler arranged downstream in flow direction (22,24) is lower than that of the cooler arranged upstream (20,22) of the latter, and
• a regenerated solvent stream (8,10) from the solvent regeneration unit (26) is fed to the gas stream (3,5) of the last cooler in flow direction of the coolers (20,22,24) connected in series upstream of the entry to this cooler, and that the respective solvent stream (9,12) separated by the gas/liquid separator (23,25) of the respective downstream cooler (22,24) is supplied to all other upstream coolers in flow direction (20,22), and that the water-laden solvent (14) obtained from the first gas/liquid separator in flow direction (21) is returned to the solvent regeneration unit (26) for water removal.

2. Process for the drying of natural gas (1) by joint cooling of solvent (9,12) and natural gases (1) according to claim 1, **characterised in that** a regenerated solvent part-stream (8,9,10) each from the solvent regeneration unit (26) is supplied to the respective gas streams of the first cooler (20) and the last coolers in flow direction (22,24) of the coolers connected in series (20,22,24) upstream of the entry to these coolers, and that the respective solvent stream (12) separated by the gas/liquid separator (23,25) of the respective downstream cooler (22,24) is supplied to all other interposed coolers (22), and that the water-containing solvent stream (14,13) separated by the first and the second gas/liquid separator in flow direction (21,23) is returned to the solvent regeneration unit (26) for water removal.

3. Process for the drying of natural gas (1) by joint cooling of solvent (9,12) and natural gases (1) according to claim 1 or 2, **characterised in that** the separation device required for the respective gas/liquid separation is designed to be integrated in the respective cooler (20,22,24).

4. Process for the drying of natural gas (1) by joint cooling of solvent (9,12) and natural gases (1) according to one of claims 1 to 3, **characterised in that** the separation device (21,23,25) required for the gas/liquid separation is a separation device of the type of a lamella separator.

5. Process for the drying of natural gas (1) by joint cooling of solvent (9,12) and natural gases (1) according to one of claims 1 to 4, **characterised in that** ethylene glycol, diethylene glycol, triethylene glycol or tetraethylene glycol or a mixture of these substances is used as physical solvent.

6. Process for the drying of natural gas (1) by joint cooling of solvent (9,12) and natural gases (1) according to one of claims 1 to 4, **characterised in that** N-methylmorpholine or N-acetylmorpholine or a mixture of these substances is used as physical solvent.

7. Process for the drying of natural gas (1) by joint cooling of solvent (9,12) and natural gases (1) according to one of claims 1 to 4, **characterised in that** methanol or alkylated polyethylene glycols or a mixture of these substances is used as physical solvent.

## Revendications

1. Procédé de séchage du gaz naturel (1) par refroidissement commun d'un solvant (9,12) et de gaz naturel (1), sachant que
• pour le séchage du gaz est mis à disposition un solvant déshydraté (8) provenant d'un équipement de régénération de solvants (26) et que
• le gaz d'alimentation traverse deux ou plus de deux refroidisseurs montés en série (20,22,24), chaque refroidisseur (20,22,24) recevant un courant de solvant (8,9,10,12) qui déshydrate dans le refroidisseur concerné (20,22,24) le gaz entrant (1,3,5) et que
• entre dans chacun de ces refroidisseurs (20,22,24) un courant mixte composé de gaz et de solvant (2,4,6), envoyé ensuite dans le refroidisseur concerné (20,22,24), pour, après un refroidissement commun dans le refroidisseur concerné (20,22,24) être séparé au moyen d'un séparateur gaz-liquide (21,23,25) implanté en sortie de chaque refroidisseur (20,22,24) en un courant de gaz à faible teneur en eau (3,5,7) et en un courant de solvant chargé d'eau (11,13,14) et que
• la teneur en eau du gaz (1,3,5) baisse successivement depuis le premier refroidisseur (20) dans le sens du courant jusqu'au dernier refroidisseur (22,24) dans le sens du courant, sachant que chaque courant de solvant chargé d'eau (11,13,14) rejeté est utilisé soit comme courant d'alimentation (12,13) pour un refroidisseur en amont (20,22) ou est renvoyé (14) dans l'équipement de régénération de solvants (26) où le solvant chargé d'eau (14) est à nouveau déshydraté (15),
**caractérisé en ce que**
• le solvant (14) en aval de chaque refroidisseur (20,22) est envoyé depuis les séparateurs gaz-liquide (21,23) dans un équipement de régénération de solvants (26) où la déshydratation est réalisée par chauffage et évaporation, puis remis en circulation et alimenté (8,9,10) en amont des refroidisseurs (20,22,24) au mélange de solvant (1,3,5) de sorte à ce que la température de sortie du gaz d'un refroidisseur en aval dans le sens du courant (22,24) soit inférieure à celle du refroidisseur en amont dans le sens du courant (20,22) et que
• le courant de gaz (3,5) du dernier refroidisseur en série dans le sens du courant (20,22,24) est alimenté avant la traversée dudit refroidisseur par un des courant de solvant régénéré (8,10) provenant de l'équipement de régénération de solvants (26) et que tous les autres refroidisseurs en amont dans le sens du courant (20,22) reçoivent le courant de solvant correspondant (9,12) rejeté par le séparateur gaz-liquide (23,25) du refroidisseur en aval (22,24) et que le solvant aqueux provenant du premier séparateur gaz-liquide (21) dans le sens du courant est renvoyé dans l'équipement de régénération de solvants (26) pour être déshydraté.

2. Procédé de séchage du gaz naturel (1) par refroidissement commun d'un solvant (9,12) et de gaz naturel (1), conformément à la revendication 1, **caractérisé en ce que** chaque courant de gaz du premier (20) et dernier (22,24) des refroidisseurs montés en série (20,22,24) est alimenté avant la traversée desdits refroidisseurs par un courant de solvant (8,9,10) régénéré, provenant de l'équipement de régénération de solvants (26) et que tous les autres refroidisseurs intercalés (22) sont alimentés par le courant de solvant correspondant (12) rejeté par le séparateur gaz-liquide (23,25) du refroidisseur directement situé en aval (22,24) et que le courant de solvant aqueux (14,13) rejeté par le premier et le deuxième séparateur gaz-liquide (21,23) dans le sens du courant est renvoyé dans l'équipement de régénération de solvants (26) pour être déshydraté.

3. Procédé de séchage du gaz naturel (1) par refroidissement commun d'un solvant (9,12) et de gaz naturel (1), conformément à la revendication 1 ou 2, **caractérisé en ce que** le dispositif de séparation nécessaire pour séparer le gaz du liquide est une construction intégrée à chaque refroidisseur (20,22,24).

4. Procédé de séchage du gaz naturel (1) par refroidissement commun d'un solvant (9,12) et de gaz naturel (1), conformément à une des revendications 1 à 3, **caractérisé en ce que** le dispositif de séparation (21,23,25) nécessaire pour séparer le gaz du liquide est de type lamellaire.

5. Procédé de séchage du gaz naturel (1) par refroidissement commun d'un solvant (9,12) et de gaz naturel (1), conformément à une des revendications 1 à 4, **caractérisé en ce qu'**est utilisé comme solvant physique de l'alcool éthylénique, du diéthylèneglycol, du triéthylèneglycol ou du tétraéthylèneglycol ou un mélange de ces substances.

6. Procédé de séchage du gaz naturel (1) par refroidissement commun d'un solvant (9,12) et de gaz naturel (1), conformément à une des revendications 1 à 4, **caractérisé en ce qu'**est utilisé comme solvant physique N-méthylmorpholine ou N-acétylmorpholine ou un mélange de ces substances.

7. Procédé de séchage du gaz naturel (1) par refroidissement commun d'un solvant (9,12) et de gaz naturel (1), conformément à une des revendications 1 à 4, **caractérisé en ce qu'**est utilisé comme solvant physique du méthanol ou des polyéthylèneglycols alylés ou un mélange de ces substances.
